# EUROPÄISCHE PATENTSCHRIFT

(11) **EP 0 541 939 B1**
(45) Veröffentlichungstag und Bekanntmachung des Hinweises auf die Patenterteilung: **10.12.1997**
(21) Anmeldenummer: 92116541.1
(22) Anmeldetag: 28.09.1992
(51) Int. Cl.: C08B 11/187, C08B 11/193

(54) **3-Allyloxy-2-hydroxypropyl-ether der Cellulose**
3-Allyloxy-2-hydroxypropyl ether of cellulose
Ether 3-allyloxy-2-hydroxypropyl de la cellulose

(30) Priorität: 11.10.1991 DE 4133677
(43) Veröffentlichungstag der Anmeldung: 19.05.1993
(73) Patentinhaber: Wolff Walsrode Aktiengesellschaft, D-29655 Walsrode (DE)
(72) Erfinder: Breckwoldt, Jörn, Dr., W-2720 Rotenburg (DE); Szablikowski, Klaus, Dr., W-3030 Walsrode (DE)
(74) Vertreter: Braun, Rolf, Dr.

(56) Entgegenhaltungen:
- DE-A- 1 418 924
- DIE MAKROMOLEKULARE CHEMIE Bd. 177, Nr. 5, 1976, CH Seiten 1301 - 1329 Y. TANAKA ET AL. 'Effects of salts, solvents, and substituents on reaction of cellulose with epoxy compounds'
- CHEMICAL ABSTRACTS, vol. 117, no. 10 Columbus, Ohio, US; abstract no. 92505d,

## Beschreibung

Die Erfindung betrifft polymerisierbare 3-Allyloxy-2-hydroxypropylether der Cellulose, die wenigstens zu 2 g in 100 g Wasser bei 25°C löslich sind.

Celluloseether bzw. Cellulosemischether haben im Laufe der Jahre eine Vielzahl von Anwendungsgebieten erschlossen. Wasserlösliche Celluloseether sind in einer Vielzahl von Anwendungsgebieten eingeführt. Für jedes Anwendungsgebiet ist eine spezifische Lösung erforderlich, die in vielen Fällen mit einer Produktanpassung einhergeht.

Trotz der Möglichkeit, die Eigenschaften der Cellulosederivate durch Variation der Substituenten in ihrer chemischen Natur, Höhe und Verteilung sowie Viskosität zu beeinflussen, erfüllen die herkömmlichen Typen nicht alle Anforderungen in vollem Maße. Als Beispiel sei hier die bis heute unbefriedigend gelöste Wisch- und Scheuerbeständigkeit von Dispersionsfarben genannt.

Um diese Nachteile zu lösen bzw. um den Celluloseethern neue Einsatzmöglichkeiten zu erschließen, wurden 3-Allyloxy-2-hydroxypropylether der Cellulose synthetisiert, deren aktive Zentren in nachfolgenden Reaktionen ausgenützt werden können. Die Doppelbindungen können zu Additionsreaktionen, und zwar sowohl zu Ionen- als auch zu Radikalreaktionen verwandt werden.

In der Literatur sind einige wenige Beispiele von polymerisierbaren Celluloseethern beschrieben. Aufgrund der leichten Zugänglichkeit konzentrieren sich die Arbeiten auf die Umsetzung mit Allylhalogeniden. Im einzelnen sind folgende wasserlösliche ungesättigte Celluloseether bekannt:
1. Allylethylcellulose (US-PS 2,891,056)
   Das Löseverhalten dieses Produktes in Wasser ist unzureichend. Produkte mit einem Substitutionsgrad DS(OA) von 0,1 - 0,5 lösen sich nur in kaltem Wasser (T < 3° C). Bei Verbindungen, die sich bei Raumtemperatur lösen, reicht der Substitutionsgrad der ungesättigten Gruppe für eine Polymerisation nicht aus.
2. Allylhydroxyethylcellulose (DE-OS 1 418 271)
   Durch Einwirkung von Allylbromid auf eine Hydroxyethylcellulose (MS: 1) entsteht in heterogener Phase ein wasserlöslicher, polymeriserbarer Cellulosemischether (DS [OA] : 0,2 - 0,7). Die gute Wasserlöslichkeit wirkt sich bei der Reinigung der Produkte nachteilig aus. Sie besitzt keinen thermischen Flockpunkt und kann nur mit einem Methanol/Wasser-Gemisch gereinigt werden. Hierbei wird ein großer Teil des Produktes ausgewaschen.
3. Allylcarboxymethylcellulose (DE-PS 1 077 651)
   Dieser nach einem zweistufigen Verfahren hergestellte Celluloseether besitzt aufgrund seines sehr geringen Allylsubstitutionsgrades (DS [OA] <0,1) eine nur schwach ausgeprägte Polymerisierbarkeit.
4. Methylhydroxyethylallylcellulose (US-PS 3,251,825)
   Beschrieben wird ein mehrstufiges Herstellungsverfahren, das erst bei relativ hohen molaren Substitutionsgraden bzgl. der Hydroxyethylgruppe (0,6 - 1,4) zu wasserlöslichen, polymerisierbaren Produkten führt.

Allen Verfahren gemeinsam ist die geringe Chemikalienausbeute von Allylbromid. Sie übersteigt in keinem Verfahren die 30 %-Marke. Allylbromid ist des weiteren sehr teuer. Allylchlorid ist zwar wesentlich billiger, jedoch auch noch weniger reaktiv, Beide Halogenide sind stark korrosiv und stehen in Verdacht, Krebs zu erzeugen (hohe Investitionskosten).

Als reaktive ungesattigte Verbindung, die unter den in der Cellulose-Chemie üblichen Reaktionsbedingungen leicht reagieren sollte, ist der Allylglycidether. In der Literatur sind Hinweise über die Veretherung der Cellulose mit Allylglycidether im Zusammenhang mit der Textilveredelung zur Verbeserung der Einfärbbarkeit bzw. Knitterfestigkeit zu finden (vergl. J. B. McKelvey at all, Textile Research Journal, 29, 918 [1959]; D. M. Soignet at all, Journal Applied Polymer Science, 11, 1155 [1967]).

In einer grundlegenden Arbeit von Y.Tanaka (Makromol. Chem. 177, 1301 [1976]) über das Reaktionsverhalten von Epoxiden mit Cellulose wird unter anderem auch der Allylglycidether erwähnt. Hinweise über wasserlösliche Produkte sind in der Arbeit jedoch nicht enthalten.

Die Erfindung lag die Aufgabe zugrunde, wasserlösliche polymerisierbare Celluloseether bereitzustellen.

Eine weitere Aufgabe bestand in der Bereitstellung eines Herstellungsverfahrens mit hoher Chemikalienausbeute und nichttoxischen Reagenzien.

Gegenstand der Erfindung sind polymerisierbare 3-Allyloxy-2-hydroxypropyletherderivate der Cellulose, die wenigstens zu 2 g in 100 g Wasser löslich sind

Gegenstand der Erfindung sind insbesondere polymerisierbare, wasserlösliche Cellulosemischether, dadurch gekennzeichnet, daß der molare Substitutionsgrad MS mit 3-Allyloxy-2-hydroxypropylgruppen 0,05 - 0,5 beträgt. Die Cellulosemischether können aus z.B. Methylcellulose, Hydroxyethylcellulose, Hydroxypropylcellulose, gemischte Celluloseether, wie Methylhydroxyethylcellulose, Methylhydroxypropylcellulose, Ethylhydroxyethylcellulose, Hydroxyethyl-, Hydroxypropylcellulose, Sulfoethylcellulose, Sulfoethylcarboxymethylcellulose, Methylsulfoethylcellulose, Hydroxyethylsulfoethylcellulose, Dihydroxypropylcellulose, Dihydroxypropylhydroxyethylcellulose, Dihydroxypropylcarboxymethylcellulose, Carboxymethylcellulose, deren Ester und Salze mit Natrium-, Kalium-, Calzium- und Ammoniumionen und Carboxymethylhydroxyethylcellulose aufgebaut sein.

Bevorzugt sind Methylhydroxyethylcellulose, Methylhydroxypropylcellulose, Hydroxyethylcellulose, Hydroxypropylcellulose und Carboxymethylcellulose.

Die 3-Allyloxy-2-hydroxypropylether der Cellulose lösen sich wenigstens zu 2 g/100 g Wasser bei 25°C unter Bildung einer klaren Lösung.

Es liegt in der Natur von Polymeren, daß die Herstellung einer gesättigten Lösung des Celluloseethers nicht möglich ist, da mit steigender Konzentration für jeden Viskositätstyp ein Ansteigen der Lösungsviskosität einhergeht, die ihre Grenze in der technischen Verarbeitbarkeit findet.

Gegenstand der Erfindung ist weiterhin ein Verfahren zur Herstellung der erfindungsgemäßen 3-Allyloxy-2-hydroxypropylcelluloseether, durch
a) Bildung einer Alkalicellulose durch Umsetzung von Cellulose mit Alkali;
b) Umsetzung der Alkalicellulose mit Allylglycidether, gegebenenfalls in Anwesenheit weiterer Veretherrungsreagenzien, die unter Basenkatalyse reagieren;
c) gegebenenfalls Alkylierung nach Abschluß der Allyloxy-2-hydroxypropylierung durch Zugabe eines entsprechenden Alkylierungsmittels.

Veretherungsreagenzien, die unter Basenkatalyse reagieren sind vorzugsweise Ethylenoxid, Propylenoxid, Glycidol und das Natriumsalz der Vinylsulfonsäure.

Unter Alkylierungsmittel werden die in der Celluloseether-Chemie üblichen Methylierungs-, Ethylierung- bzw. Carboxymethylierungsmittel verstanden.

Als Ausgangsmaterial für das erfindungsgemäße Verfahren werden gemahlene Cellulose, wie Bleichlinters oder Holzzellstoff verwendet. Die Viskositätsstufen der Produkte lassen sich durch die Auswahl der Cellulosen, die einen entsprechenden Durchschnittspolymerisationsgrad aufweisen, einstellen. Niedrigviskose Produkte können durch Verwendung von nach üblichen Verfahren oxidativ abgebauten Zellstoffen hergestellt werden.

Die Alkalisierung der Cellulose und ihre nachfolgende Veretherung kann in Anwesenheit von organischen Lösemitteln durchgeführt werden, um lokale Überhitzungen zu vermeiden und um zu gleichmäßig veretherten Produkten zu gelangen. Geeignete organische Lösemittel sind niedere Alkohole, die vorzugsweise 2 - 4 Kohlenstoffatome/Moleküle enthalten sowie Ether mit vorzugsweise 2 - 4 Kohlenstoffatomen/Molekül oder Mischungen dieser Lösungsmittel. Die Cellulose wird zur Alkalisierung mit der Natronlauge besprüht, wobei ihre Konzentration 20 - 50 Gew.-%, vorzugsweise 40 - 50 Gew.-% betragen soll und die eingesetzte Menge nicht kleiner als 1,6 mol Natriumhydroxid/mol Cellulose ist. Erfindungsgemäß erfolgt die Zugabe des unter Basenkatalyse reagierenden Reagenz und des Allylglycidethers entweder vor der Natriumhydroxidzugabe oder nach der Alkalisierungsphase. Zur Veretherung wird das Reaktionsgemisch bis auf Temperaturen von 40 - 90°C, vorzugsweise 50 - 70°C, aufgeheizt und das eingestellte Temperaturniveau bis zur vollständigen Umsetzung beibehalten. Vor der Zugabe des Alkylierungsmittels wird das Reaktionsgemisch gekühlt, vorzugsweise auf Temperaturen unter 50°C. Nun wird erneut auf Temperaturen von 50 - 100°C, vorzugsweise 70 - 90°C, aufgeheizt und bei dieser Temperatur innerhalb von 1 - 5 h, vorzugsweise 1,5 - 3 h, die Alkylierungsreaktion durchgeführt.

Die Reinigung der Rohprodukte erfolgt nach den in der Celluloseether-Chemie üblichen Methoden. Ionische Celluloseether und Produkte, die ausschließlich mit Alkylenoxiden hergestellt wurden, werden mit wäßrigem Methanol, vorzugsweise 70 %iges Methanol, oder mit wäßrigem Aceton, vorzugsweise 80 %igem Aceton gereinigt.

Die Reinigung der alkylierten nichtionischen Cellulosederivaten kann durch eine Heißwasserwäsche erfolgen, da sie einen thermischen Flockpunkt aufweisen.

Die Umsetzung des Allylglycidethers kann weiter in einer besonderen Ausführungsform des Verfahrens mit bereits wasserlöslichen Celluloseethern in Lösung oder Dispersion erfolgen, wobei die Celluloseether bevorzugt in Suspensionen eingesetzt werden, weil sie sehr hochviskose Lösungen bilden, die nur geringe Feststoffgehalte erlauben und damit großen Reaktionsraum und umständliche Aufarbeitung erforden, Geeignete Dispersionsmittel haben die oben genannte Bedeutung. Der Celluloseether wird in der Regel im entsprechenden Medium vorgelegt und der Allylglycidether als solches oder auch in einem Lösemittel gelöst nach der Alkalisierungsphase zudosiert.

Die Reaktionstemperatur liegt bei 40 - 90°C, vorzugsweise 50 - 70°C.

Die Reaktionszeit beträgt 1 - 5 h, vorzugsweise 1,5 - 3 h.

Die Reinigung der Rohprodukte erfolgt nach Art der Substituenten in der oben genannten Art und Weise.

3-Allyloxy-2-hydroxypropylcellulose-Mischether mit einem 3-Allyloxy-2-hydroxypropyl MS von 0,05 - 0,5 sind klar wasserlöslich und lassen sich leicht polymerisieren. Die erfindunsgemäß hergestellten Celluloseether zeigen eine gute Filmbildung. Die Filme sind durchsichtig und sehr flexibel. Filme der 3-Allyloxy-2-hydroxypropylcellulose- Mischether können unlöslich werden, indem man die vorhandene Doppelbindung zur Vernetzung bringt. Dieses kann durch UV-Licht initiiert werden. Dabei verfärben sich die Filme nicht. Eine thermische Initiierung ist nicht möglich.

In den erfindungsgemäß hergestellten 3-Allyloxy-2-hydroxypropylcellulose-Mischether sind Doppelbindungen in die Cellulosekette eingeführt worden, die man in nachfolgenden Reaktionen als reaktive Zentren ausnutzen kann. Die Doppelbindungen können zu Additionsreaktionen, und zwar sowohl zu Ionen- als auch zu Radikalreaktionen angewandt werden.

Aufgrund der Homo- bzw. Copolymerisationsfähigkeit mit ungesättigten Verbindungen können mit Hilfe der 3-Allyloxy-2-hydroxypropylcellulose-Mischether Lackstoffe, Coatings und wasserabsorbierende Materialien hergestellt werden.

Für Coatings von Papieren und anderen Substraten sind die 3-Allyloxy-2-hydroxypropylcellulose-Mischether besonders geeignet, da diese durch UV-Licht, ohne die Transparenz nachteilig zu verändern, homopolymerisierbar sind. Mit Vinylmonomeren, insbesndere Acrylaten und/oder Methacrylaten, können durch eine Copolymerisation die Eigenschaften der Überzüge variiert werden. Schwerentflammbare Coatings für Papiere und Textilien können durch
1. eine Copolymerisation mit Alkenylphosphorverbindungen,
2. eine Addition von Si-H- und P-H-Verbindungen an die Doppelbindung erzielt werden. Für Dekoration und Theaterkulissen besitzen diese ein großes Interesse.

Die erfindungsgemäß hersgestellten 3-Allyloxy-2-hydroxypropylcellulose-Mischether können besonders vorteilhaft als Verdickungsmittel in Dispersionsfarben eingesetzt werden. Aufgrund ihrer Polymerisationsfähigkeit verbessern sie die Wisch- und Scheuerbeständigkeit.

Der Gegenstand der Erfindung soll anhand der folgenden Beispiele erläutert werden. Bei den erfindungsgemäßen Celluloseethern haben die Bedeutung DS (Degree of Substitution) und MS (Molarer Substitutionsgrad) die übliche Bedeutung.

In jeder Anhydroglykoseeinheit in dem Cellulosemolekül sind drei Hydroxylgruppen vorhanden.
- DS: ist die Durchschnittsanzahl der in der Cellulose substituierten Hydroxylgruppen/Anhydroglucoseeinheit.
- MS: ist die Durchschnittsanzahl der Mole des mit der Cellulose kombinierten Reaktionspartners/Anhydroglycoseeinheit.

### Beispiele

### Beispiel 1

### Methyl-3-allyloxy-2-hydroxypropylcellulose

In einem mit Inertgas gespülten 2-l-Druckautoklaven werden 121,5 g feingemahlener Holzzellstoff mit 120 g 50 %iger Natronlauge 60 min bei Raumtemperatur alkalisiert. Dann werden 57 g Allylglycidether zur Alkalicellulose gegeben. Die Temperatur im Autoklaven wird auf 80°C erhöht. Nach einer Veretherungszeit von 2 h wird der Reaktor abgekühlt und mit 12 mol Methylchlorid/mol Cellulose versetzt. Es wird auf 80°C erwärmt und 2 h methyliert. Nach dem Abkühlen wird das Produkt mit heißem Wasser gereinigt und getrocknet. Das entstandene Produkt weist folgende Substitutionsgrade auf:
- DS(OMe):: 1,69
- MS(AHP):: 0,21

Die Chemikalienausbeute, bezogen auf den Allylglycidether, beträgt 40 %.

### Beispiel 2

### Methylhydroxypropyl-3-allyloxy-2-hydroxypropylcellulose

In einem mit Inertgas gespülten 2-l-Druckautoklaven werden 121,5 g feingemahlener Holzzellstoff mit 120 g 50 %iger Natronlauge 60 min bei Raumtemperatur alkalisiert. Dann werden 87 g Propylenoxid und 91 g Allylglycidether zur Alkalicellulose gegeben. Die Temperatur im Autoklaven wird auf 90°C erhöht. Nach einer Veretherungszeit von 1 h wird der Reaktor abgekühlt und mit 12 mol Methylchlorid/mol Cellulose versetzt. Es wird nun auf 80°C erwärmt und 4 h methyliert. Nach dem Abkühlen wird das Produkt mit heißem Wasser gereinigt und getrocknet. Es weist folgende Substitutionsgrade auf:
- DS(OMe):: 1,45
- MS(HP):: 1,3
- MS(AHP):: 0,3

### Beispiel 3

### Methyl-3-allyloxy-2-hydroxypropylhydroxyethylcellulose

In einem mit Inertgas gespülten 3-l-Glasreaktor werden 141,7 g feingemahlene Methylhydroxyethylcellulose mit 3 l Isopropanol, welches 5 Gew.-% Wasser enthält, aufgeschlämmt und mit 15 g NaOH (Prills) versetzt und 1 h bei Raumtemperatur alkalisiert. Nach der Alkalisierung werden 42,8 g Allylglycidether zur Alkalicellulose gegeben. Die Temperatur im Glasreaktor wird langsam auf 70°C erhöht und bei dieser 120 min gehalten. Nach dem Abkühlen des Reaktors wird mit Essigsäure neutralisiert und das Produkt mittels einer Heißwasserwäsche gereinigt. Der entstandene Celluloseether weist folgende Substitutionsgrade auf:
- DS(OMe):: 1,85
- MS(HE):: 0,45
- MS(AHP):: 0,18

Die Chemikalienausbeute, bezogen auf Allylglycidether, beträgt 46 %.

### Beispiel 4

### Hydroxyethyl-3-allyloxy-2-hydroxypropylcellulose

In einem mit Inertgas gespülten 3-l-Glasreaktor 104 g feingemahlene Hydroxyethylcellulose mit 3 l Isopropanol, welches 5 Gew.-% Wasser enthält, aufgeschlämmt und mit 15 g NaOH (Prills) versetzt und 1 h bei Raumtemperatur alkalisiert. Nach der Alkalisierung werden 42,8 g Allylglycidether zur Alkalicellulose gegeben. Die Temperatur im Glasreaktor wird langsam auf 70°C erhöht und bei dieser 120 min gehalten. Nach dem Abkühlen des Reaktors wird mit Salpetersäure neutralisiert und mit 80 %igem Methanol gereinigt und getrocknet. Das entstandene Produkt weist folgende Substitutionsgrade auf:
- MS(HE):: 2,5
- MS(AHP):: 0,26

Die Chemikalienausbeute, bezogen auf Allylglycidether, beträgt 86 %.

### Beispiel 5

### Carboxymethyl-3-allyloxy-2- hydroxypropylcellulose

In einem mit Inertgas gespülten 3-l-Glasreaktor werden 173,7 g feingemahlene Carboxymethylcellulose mit 3 l Isopropanol aufgeschlämmt und mit 15 g NaOH (Prills) versetzt und 1 h bei Raumtemperatur alkalisiert. Nach der Alkalisierung werden 42,8 g Allylglycidether zur Alkalicellulose gegeben. Die Temperatur im Glasreaktor wird langsam auf 70°C erhöht und bei dieser 120 min gehalten. Nach dem Abkühlen des Reaktors wird mit Essigsäure neutralisiert und mit 70 %igem Methanol gereinigt und getrocknet. Die entstandene Carboxymethyl-3-allyloxy-2-hydroxypropylcellulose weist folgende Substitutionsgrade auf:
- DS(CM):: 0,87
- MS(AHP):: 0,2

### Vergleichsbeispiel 1

### Methylhydroxyethylallylcellulose

In einem Inertgas gespülten 2-l-Druckautoklaven werden 121,5 g feingemahlener Holzzellstoff mit 120 g 50 %iger Natronlauge 75 min bei Raumtemperatur alkalisiert. Dann werden 33 g Ethylenoxid und 28,6 g Allylchlorid zur Alkalicellulose gegeben. Die Temperatur im Autoklaven wird auf 55°C erhöht. Nach einer Veretherungszeit von 3 h wird der Reaktor gekühlt und mit 12 mol Methylchlorid/mol Cellulose versetzt. Es wird auf 80°C erwärmt und 90 min methyliert. Nach dem Abkühlen wird das Produkt mit heißem Wasser gereinigt und getrocknet. Die entstandene Methylhydroxyethylallylcellulose weist folgende Substitutionsgrade auf:
- DS(OMe):: 1,72
- DS(OA):: 0,18
- MS(HE):: 0,77

Die Chemikalienausbeute, bezogen auf Allylchlorid, beträgt 35 %.

### Löslichkeit

Die erfindungsgemäßen Celluloseether lösen sich in Wasser zu einer klaren Lösung. Zur Überprüfung der Polymerisationsfähigkeit wurden aus den erfindungsgemäßen Celluloseethern Filme hergestellt und anschließend mit UV-Licht bestrahlt. Die Löslichkeit des bestrahlten Films gibt Auskunft über die Polymerisationsfähigkeit. Zur Herstellung von Filmen wurde eine 5 %ige Lösung des Celluloseethers in Wasser hergestellt. Mit einem Handgießer wurden dann Filme auf Glasplatten ausgezogen und diese 1 h bei 50°C im Umlufttrockenschrank getrocknet und von der Glasplatte abgezogen. Die Filme sind klar, flexibel und lösen sich in Wasser. Werden die Filme einer UV-Bestrahlung ausgesetzt, so vernetzen die ungesättigten Gruppen mittels einer Homopolymerisation. Die Filme werden dann in Wasser unlöslich.

Die Polymerisationsfähigkeit des Allyloxy-2-hydroxypropylsubstituenten ist deutlich besser als die des Allylsubstituenten (siehe Tabelle 1).

**Tabelle 1**

| Löslichkeiten der erfindungsgemäßen Celluloseether | | | | | | | |
|---|---|---|---|---|---|---|---|
| Produkt | DS(OMe) | MS(HE) | MS(AHP) | DS(OA) | V₂ (mPa.s) | Wasserlöslichkeit | |
| | | | | | | vor der Polymerisation | nach der Polymerisation |
| gemäß Beispiel 3 | 1,85 | 0,45 | 0,18 | | 4.000 | + | - |
| gemäß Vergleichsbeispiel 1 | 1,72 | 0,77 | | 0,18 | 10.869 | + | löst stark an |
| gemäß Beispiel 4 | | 2,5 | 0,26 | | | + | - |
| + = löslich - = unlöslich | | | | | | | |

Die erfindungsgemäß hergestellten ungesättigten Celluloseether beeinflußen im Vergleich zum Markt eingeführten Produkt Natrosol Plus vorteilhaft die
* Rheologie,
* Lagerstabilität,
* Verarbeitbarkeit und
* Scheuerfestigkeit
von Dispersionsfarben (siehe Tabelle 2).

**Tabelle 2**

| Anwendungstechnische Beurteilung der erfindungsgemäßen Celluloseether | | | |
|---|---|---|---|
| Prüfmethode | Produktbezeichnung | | |
| | MHEC+AGE gemäß Beispiel 3 | Natrosol Plus | Dimension |
| Viskosität, wäßrig, Haake MV II, D:2,55s | 4.400 | 6.600 | mPa.s |
| Einsatzmenge in der Farbe | 0,5 | 0,47 | % |
| Viskosität, Farbe, Haake MV II, D=2,55s | 14.000 | 13.300 | mPa.s |
| Viskosität, Farbe, Stormer ASTM-D 562 | 128 | 128 | KU |
| Viskosität, Farbe, Haake PK 100, D=10240s | 160 | 135 | mPa.s |
| Lagerstabilität, Farbe, Haake MV II; D=2,55s, 15 Tage/40°C | 14.000 | 12.700 | mPa.s |
| Scheuerfestigkeit, DIN 53778 T2 | 5.700 | 2.700 | Zyklen |
| | 5.900* | | |
| Beurteilung des Anstrichfilms | 2 - 3 | 4 -5 | |

| | | | |
|---|---|---|---|
| *) mit UV-Licht bestrahlt | | | |

## Patentansprüche

1. Polymerisierbare 3-Allyloxy-2-hydroxypropyletherderivate der Cellulose, die wenigstens zu 2 g in 100 g Wasser bei 25°C löslich sind.

2. 3-Allyloxy-2-hydroxypropyletherderivate der Cellulose gemäß Anspruch 1, dadurch gekennzeichnet, daß der molare Substitutionsgrad (MS) mit 3-Allyloxy-2-hydroxypropylgruppen 0,05 - 0,5 beträgt.

3. Verfahren zur Herstellung von 3-Allyloxy-2-hydroxypropylether der Cellulose nach Anspruch 1 oder 2, dadurch gekennzeichnet, daß man Cellulose mit Alkali unter Bildung von Alkalicellulose umsetzt, dann die Alkalicellulose mit Allylglycidether, gegebenenfalls in Anwesenheit weiterer Veretherungsreagenzien umsetzt und gegebenenfalls nach Abschluß der 3-Allyloxy-2-hydroxypropylierung durch Zugabe eines Alkylierungsmittels alkyliert.

## Claims

1. Polymerisable 3-allyloxy-2-hydroxypropyl ether derivatives of cellulose, having a solubility of at least 2 g in 100 g water at 25°C.

2. 3-Allyloxy-2-hydroxypropyl ether derivatives of cellulose according to claim 1, characterised in that the molar degree of substitution (MS) with 3-allyloxy-2-hydroxypropyl groups is from 0.05 to 0.5.

3. A process for the preparation of 3-allyloxy-2-hydroxypropyl ethers of cellulose according to claim 1 or 2, characterised in that cellulose is reacted with alkali with the formation of alkali cellulose, the alkali cellulose is then reacted with allyl glycidyl ether, optionally in the presence of other etherifying reagents and, after termination of the 3-allyloxy-2-hydroxypropylation, is optionally alkylated by the addition of an alkylating agent.

## Revendications

1. Ethers 3-allyloxy-2-hydroxypropyliques polymérisables dérivés de la cellulose, solubles en proportions d'au moins 2 g dans 100 g d'eau à 25°C.

2. Ethers 3-allyloxy-2-hydroxypropyliques dérivés de la cellulose selon la revendication 1, caractérisés en ce que le degré de substitution molaire (SM) par les groupes 3-allyloxy-2-hydroxypropyles va de 0,05 à 0,5.

3. Procédé pour la préparation des éthers 3-allyloxy-2-hydroxy-propyliques de la cellulose selon la revendications 1 ou 2, caractérisé en ce que l'on fait réagir la cellulose avec formation d'une alcalicellulose qu'on fait ensuite réagir avec l'éther allylglycidylique, le cas échéant en présence d'autres réactifs éthérifiants après quoi, le cas échéant, on alkyle par addition d'un agent alkylant.
